# EUROPEAN PATENT APPLICATION

(11) **EP 4 664 702 A1**
(43) Date of publication of application: **17.12.2025**
(21) Application number: 25749715.6
(22) Date of filing: 01.04.2025
(51) Int. Cl.: H02H 5/04, H02J 13/00

(54) **POWER SUPPLY DEVICE**

(30) Priority: 29.04.2024 CN 202420923580 U
(71) Applicant: Anker Innovations Technology Co., Ltd., Changsha, Hunan 410221 (CN)
(72) Inventor: LI, Mingkang, Changsha, Hunan 410221 (CN); LU, Hao, Changsha, Hunan 410221 (CN)
(74) Representative: Wörz, Volker Alfred
(86) International application number: PCT/CN2025/086648
(87) International publication number: WO 2025/228055

(57) **Abstract**

Some embodiments of the present application provide a power supply device, in relation to the field of protection circuits. In the power supply device provided by some embodiments of the present disclosure, a temperature detection module is configured to detect a temperature at a voltage terminal of a first connection module and send a value of the temperature to a processing module. The processing module is configured to detect whether the temperature at the voltage terminal of the first connection module exceeds the predetermined temperature. In a case where the temperature exceeds the predetermined temperature, the processing module is configured to stop the voltage terminal of the first connection module from receiving an operating voltage. In addition, the processing module is further configured to send a power input stop message to a power-sourcing device through a communication terminal, enabling the power-sourcing device to stop outputting the operating voltage to the power supply device according to the power input stop message. In other words, in a case where an over-temperature condition occurs at a connector of the power supply device, the power supply device is configured not only to stop receiving the operating voltage from the power-sourcing device but also to communicate with and instruct the power-sourcing device to stop outputting the operating voltage to the power supply device.

## Description

This application claims priority to Chinese Patent Application No. 202420923580.0, filed on April 29, 2024 and entitled "POWER SUPPLY DEVICE", the contents of which are herein incorporated by reference in their entireties.

### TECHNICAL FIELD

The present disclosure relates to the field of protection circuits, and in particular to a power supply device.

### BACKGROUND

In recent years, power devices such as chargers and power banks, etc., using Type-C as an output port connector have become widely adopted. The Type-C port is a brand new form of universal serial bus (USB) port introduced by the USB implementers forum (USB-IF), which is designed to replace traditional USB Micro-B and USB-A interfaces. The Type-C port connector features a compact geometric size, along with faster data transfer speeds and higher charging efficiency, etc., thus becoming highly favored by numerous manufacturers and consumers.

In market applications, these power banks or chargers and other power devices exhibit a relatively high failure rate at the connector ports, which may further lead to internal short circuits in the power devices, causing the connectors of the power devices to continuously overheat and melt, or even result in a plastic casing around the port melting, posing serious risks such as fire hazards.

### SUMMARY

Some embodiments of the present disclosure may provide a power supply device to address the above problems. Some technical solutions of the present disclosure may be the following.

In a first aspect, some embodiments of the present disclosure may provide a power supply device. The power supply device may include a processing module, a first connection module, a temperature detection module, and a first port protection module. The first connection module may include a voltage terminal and a communication terminal. The voltage terminal may be configured to receive an operating voltage input from a power-sourcing device to the power supply device. The communication terminal may be configured to communicate with the power-sourcing device. The temperature detection module may be disposed within a predetermined range of the voltage terminal of the first connection module, and may be configured to detect a temperature at the voltage terminal of the first connection module and send a value of the detected temperature to the processing module. The processing module may include a detection terminal, a voltage terminal, and a communication terminal. The detection terminal of the processing module may be connected to an output terminal of the temperature detection module. The communication terminal of the processing module may be connected to a communication terminal of the first connection module. The voltage terminal of the processing module may be connected to a first terminal of the first port protection module. The first terminal of the first port protection module may be connected to the voltage terminal of the processing module, and a second terminal of the first port protection module may be connected to the voltage terminal of the first connection module. In a case where the processing module detects that the temperature exceeds a predetermined temperature, the processing module may be configured to control the first port protection module to switch to an off state, enabling the voltage terminal of the first connection module to stop receiving the operating voltage. In a case where the processing module detects that the temperature exceeds the predetermined temperature, the processing module may be further configured to send a power input stop message to the power-sourcing device through the communication terminal of the first connection module, enabling the power-sourcing device to stop outputting the operating voltage to the power supply device according to the power input stop message.

Technical effects of the technical solutions in some embodiments of the present disclosure may at least be the following. In the power supply device provided by some embodiments of the present disclosure, the temperature detection module may be configured to detect the temperature at the voltage terminal of the first connection module and send a value of the temperature to the processing module. The processing module may be configured to determine whether the temperature at the voltage terminal of the first connection module exceeds the predetermined temperature. In a case where the temperature exceeds the predetermined temperature, the processing module may be configured to stop the voltage terminal of the first connection module from receiving the operating voltage. In addition, the processing module may further be configured to send the power input stop message to the power-sourcing device through the communication terminal, enabling the power-sourcing device to stop outputting the operating voltage to the power supply device according to the power input stop message. In other words, in a case where an over-temperature condition occurs at a connector of the power supply device, the power supply device may be configured not only to stop receiving the operating voltage from the power-sourcing device but also to communicate with and instruct the power-sourcing device to stop outputting the operating voltage to the power supply device. Compared with a traditional one-way protection that only stops the reception of the operating voltage, some technical solutions of the present disclosure may offer an enhanced protection for the power supply device during power delivery between the power supply devices, thereby reducing the problems of circuit failures or even melting of the connector casing due to over-temperature, etc., occurred in the power supply device.

### BRIEF DESCRIPTION OF THE DRAWINGS

In order to more clearly illustrate the technical solutions in some embodiments of the present disclosure or the related art, a brief introduction will be given below to the drawings required in the description of the embodiments or the related art. It is evident that the drawings described below are merely some embodiments of the present disclosure, and those skills in the art may obtain other drawings based on the following drawings without creative work.
FIG. 1 is a schematic structural view of a power supply device serving as a power-receiving device according to some embodiments of the present disclosure.
FIG. 2 is a schematic structural view of a power supply device serving as a power-sourcing device according to some embodiments of the present disclosure.
FIG. 3 is a schematic structural view of a power supply device according to some embodiments of the present disclosure.
FIG. 4 is a schematic structural view of a power supply device according to some embodiments of the present disclosure.
FIG. 5 is a schematic structural view of a power supply device according to some embodiments of the present disclosure.
FIG. 6 is a schematic structural view of a power supply device according to some embodiments of the present disclosure.
FIG. 7 is a schematic structural view of a power supply device according to some embodiments of the present disclosure.
FIG. 8 is a schematic structural view of a power supply device according to some embodiments of the present disclosure.

### DETAILED DESCRIPTION

The technical solutions in some embodiments of the present disclosure will be clearly and completely described below with reference to the accompanying drawings in the embodiments of the present disclosure. Obviously, the described embodiments are only a part of the embodiments of the present disclosure, rather than all of them. Based on the embodiments of the present disclosure, all other embodiments obtained by those skills in the art without creative efforts shall fall within the scope of protection of the present disclosure.

In the description of the present disclosure, it should be understood that terms such as "first" and "second", etc., are used for descriptive purposes only and should not be construed as indicating or implying relative importance. In the description of the present disclosure, it should be noted that unless otherwise explicitly specified or defined, the terms "including", "having", and any variations thereof are intended to cover non-exclusive inclusion. For example, a process, method, system, product, or device that includes a series of operations or units is not limited to the listed steps or units but may optionally include operations or units not explicitly listed or inherent to such processes, methods, products, or devices. For those skills in the art, the specific meanings of the above terms in the present disclosure can be understood based on specific contexts. Furthermore, in the description of the present disclosure, unless otherwise specified, "a plurality of" refers to two or more. The term "and/or" describes the association relationship of associated objects, indicating that there may be three relationships. For example, "A and/or B" may represent: A alone, both A and B, or B alone. The character "/" generally indicates an "or" relationship between the associated objects.

The present disclosure will be described in detail below in conjunction with some embodiments.

It should be noted that the information (including but not limited to user device information, user personal information, etc.), data (including but not limited to data for analysis, stored data, displayed data, etc.), and signals involved in the embodiments of this specification are all authorized by the user or fully authorized by relevant parties. The collection, use, and processing of related data comply with the relevant laws, regulations, and standards of the applicable countries and regions. For example, the interactive behaviors described in this specification are obtained under full authorization.

In recent years, power devices such as chargers and power banks, etc., using Type-C as an output port connector have become widely adopted. The Type-C port is a brand new form of universal serial bus (USB) port introduced by the USB implementers forum (USB-IF), which is designed to replace traditional USB Micro-B and USB-A interfaces. The Type-C port connector features a compact geometric size, along with faster data transfer speeds and higher charging efficiency, etc., thus becoming highly favored by numerous manufacturers and consumers.

In market applications, these power banks or chargers and other power devices exhibit a relatively high failure rate at the connector ports, which may further lead to internal short circuits in the power devices, causing the connectors of the power devices to continuously overheat and melt, or even result in a plastic casing around the port melting, posing serious risks such as fire hazards.

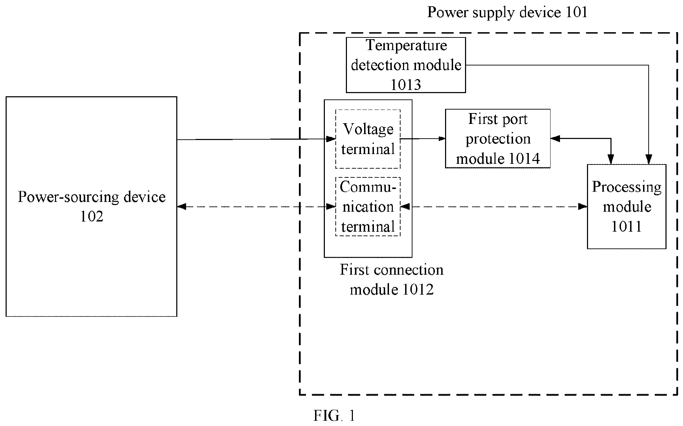

To address the above problems, some embodiments of the present disclosure may provide a power supply device as a solution. In some embodiments, as shown in FIG. 1, FIG. 1 is a schematic structural view of a power supply device serving as a power-receiving device according to some embodiments of the present disclosure. The power supply device 101 may include: a processing module 1011, a first connection module 1012, a temperature detection module 1013, and a first port protection module 1014.

The temperature detection module 1013 may be disposed within a predetermined range of a voltage terminal of the first connection module 1012. The voltage terminal of the first connection module 1012 may be configured to receive an operating voltage input from a power-sourcing device 102 to the power supply device 101. The predetermined range may be understood as a circular or other shaped area centered on the voltage terminal of the first connection module 1012 and having a preset radius defined by a user. In other words, the temperature detection module 1013 may be disposed near the voltage terminal of the first connection module 1012, close to the first connection module 1012.

The power-sourcing device 102 may be understood as a device or facility that is configured to transmit electric energy stored in itself or supplied through a power transmission line to the power supply device 101. The power-sourcing device 102 may be mainly configured to convert high-voltage electricity into low-voltage electricity to provide an operating voltage for the power supply device 101. The power-sourcing device 102 may be, for example, a transformer, a charger, or a power bank, etc.

The first connection module 1012 may be understood as a connector of the power supply device 101 or a connection interface of the power supply device 101. The first connection module 1012 may include the voltage terminal and a communication terminal.

The temperature detection module 1013 may be understood as a device for detecting temperature. For example, the temperature detection module 1013 may be a temperature sensor or the like. The temperature detection module 1013 may be disposed within the predetermined range of the first connection module 1012, thereby enabling more accurate detection of the temperature of the first connection module 1012, improving the accuracy of temperature detection, and enhancing the sensitivity of the power supply device in identifying an over-temperature condition.

The detection terminal of the processing module 1011 may be connected to an output terminal of the temperature detection module 1013. The temperature detection module 1013 may be configured to detect a temperature at the voltage terminal of the first connection module 1012 and send the temperature to the processing module 1011. The processing module 1011 may be configured to receive the temperature of the voltage terminal of the first connection module 1014 detected by the temperature detection module 1013. In a case where the power supply device 101 receives the operating voltage transmitted from the power-sourcing device 102 through the voltage terminal of the first connection module 1014, the temperature at the voltage terminal of the first connection module 1014 may rise.

In some embodiments, the processing module 1011 may be implemented in at least one hardware form such as a digital signal processing (DSP), a field-programmable gate array (FPGA), or a programmable logic array (PLA), etc. The processing module may be a combination of one or more components such as a central processing unit (CPU), a graphics processing unit (GPU), and a modem, etc. The CPU may mainly be configured to handle operating system, user interface, and applications. The GPU may be configured to handle rendering and drawing of content to be displayed on a screen. The modem may be configured to handle wireless communication. It should be understood that the modem may further be implemented independently as a separate chip rather than being integrated into the processing unit or microcontroller.

A memory may include a random access memory (RAM) and a read-only memory (ROM). In some embodiments, the memory may include a non-transitory computer-readable storage medium. The memory may be configured to store instructions, programs, code, code sets, or instruction sets. The memory may include a program storage area and a data storage area. The program storage area may be configured to store instructions for implementing the operating system, for implementing at least one function (such as touch control, audio playback, image playback, etc.), and for implementing the methods in the following embodiments. The data storage area may be configured to store data related to the methods described in the embodiments below. In some embodiments, the memory may include at least one storage device located remotely from the processing module 1011.

A voltage terminal of the processing module 1011 may be connected to a first terminal of the first port protection module 1014. A second terminal of the first port protection module 1014 may be connected to the voltage terminal of the first connection module 1012. In a case where the processing module 1011 detects that the temperature exceeds a predetermined temperature, the processing module 1011 may be configured to control the first port protection module 1014 to switch to an off state, enabling the voltage terminal of the first connection module 1012 to stop receiving the operating voltage. For example, the predetermined temperature may be 130°C. In a case where the processing module 1011 detects that the temperature exceeds the predetermined temperature, the processing module 1011 may be configured to control the first port protection module 1014 to switch to the off state, thereby protecting the first connection module 1012.

In some embodiments, the first port protection module 1014 may include a metal-oxide-semiconductor (MOS) transistor. A first terminal of the MOS transistor may be connected to the voltage terminal of the processing module 1011. A second terminal of the MOS transistor may be connected to the voltage terminal of the first connection module 1014. The processing module 1011 may be configured to control the MOS transistor to switch to an off state upon determining that the temperature exceeds the predetermined temperature, enabling the voltage terminal of the first connection module 1012 to stop receiving the operating voltage.

In the above embodiments, the voltage terminal of the first connection module may be controlled to receive or not receive the operating voltage by means of switching the MOS transistor in the first port protection module between an on state and an off state. In a case where the MOS transistor is in the on state, the voltage terminal of the first connection module may be configured to receive the operating voltage. In a case where the MOS transistor is in the off state, the voltage terminal of the first connection module may be configured to stop receiving the operating voltage, which may stop a further increase in the temperature of the first connection module. A structure of the first port protection module provided in the above embodiments is simple and effective.

A communication terminal of the processing module 1011 may be connected to the communication terminal of the first connection module 1012. The communication terminal of the first connection module 1012 may be configured to communicate with the power-sourcing device 102. In a case where the processing module 1011 detects that the temperature exceeds the predetermined temperature, the processing module 1011 may be configured to send a power input stop message to the power-sourcing device 102 through the communication terminal of the first connection module 1012, enabling the power-sourcing device 102 to stop outputting the operating voltage to the power supply device 101 according to the power input stop message.

For example, the power supply device 101 and the power-sourcing device 102 may be configured to communicate with each other through a Type-C communication protocol. In a case where the processing module 1011 detects that the temperature exceeds the predetermined temperature, the processing module 1011 may be configured to send the power input stop message to the power-sourcing device 102 through the communication terminal of the first connection module 1012 based on the Type-C communication protocol. In some embodiments, the processing module 1011 may be configured to actively disconnect the Type-C communication connection with the power-sourcing device 102, enabling the power-sourcing device 102 to trigger a condition of receiving the power input stop message. In a case where the power-sourcing device 102 receives the power input stop message, the power-sourcing device 102 may be configured to stop outputting the operating voltage to the power supply device 101.

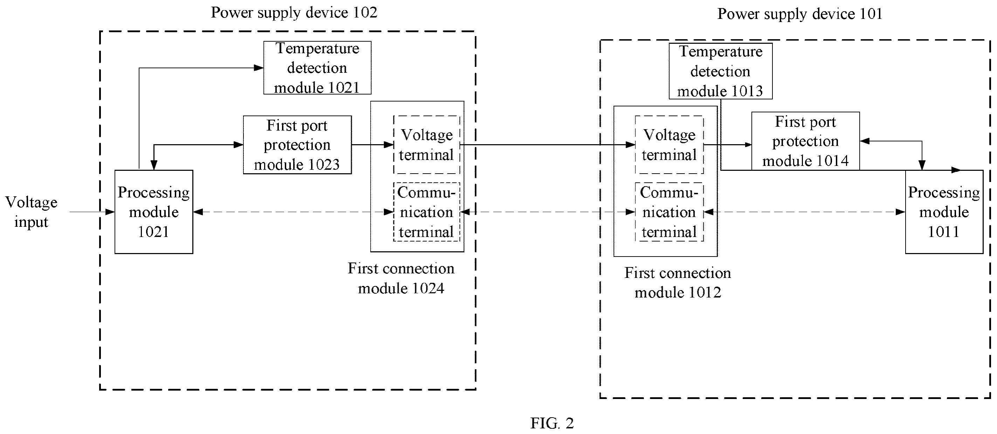

As shown in FIG. 2, FIG. 2 is a schematic structural view of a power supply device serving as a power-sourcing device according to some embodiments of the present disclosure. The power supply device 101 shown in FIG. 1 may serve as a power-receiving device and may be configured to receive the operating voltage provided by the power-sourcing device 102. In some embodiments of the present embodiment, the power supply device 102 may serve as a power-sourcing device and may have the same structure as the power supply device 101. For example, both the power supply device 101 and the power supply device 102 may be power banks. In other words, in the present and subsequent embodiments, the power supply device 101 may serve as a power-receiving device or a power-sourcing device, which is not limited herein.

In some embodiments, the power supply device 102 may be configured to provide an operating voltage to the power supply device 101 through a voltage terminal of a first connection module 1024. The power supply device 102 may be configured to communicate with the power supply device 101 through a communication terminal of the first connection module 1024.

In a case where a processing module 1021 detects that a temperature exceeds a predetermined temperature, the processing module 1021 may be configured to control the first port protection module 1024 to switch to an off state, enabling the voltage terminal of the first connection module 1022 to stop outputting the operating voltage. For example, the predetermined temperature may be 130°C. The processing module 1021 may be configured to control the first port protection module 1024 to switch to the off state upon determining that the temperature exceeds the predetermined temperature. In a case where the processing module 1021 detects that the temperature exceeds the predetermined temperature, the processing module 1021 may be configured to send a power input stop message to the power supply device 101 through the communication terminal of the first connection module 1022, enabling the power supply device 10 to stop receiving the operating voltage according to the power input stop message.

In the power supply device provided by some embodiments of the present disclosure, the temperature detection module may be configured to detect the temperature at the voltage terminal of the first connection module and send a value of the temperature to the processing module. The processing module may be configured to determine whether the temperature at the voltage terminal of the first connection module exceeds the predetermined temperature. In a case where the temperature exceeds the predetermined temperature, the processing module may be configured to stop the voltage terminal of the first connection module from receiving the operating voltage. In addition, the processing module may further be configured to send the power input stop message to the power-sourcing device through the communication terminal, enabling the power-sourcing device to stop outputting the operating voltage to the power supply device according to the power input stop message. In other words, in a case where an over-temperature condition occurs at a connector of the power supply device, the power supply device may be configured not only to stop receiving the operating voltage from the power-sourcing device but also to communicate with and instruct the power-sourcing device to stop outputting the operating voltage to the power supply device. Compared with a traditional one-way protection that only stops the reception of the operating voltage, some technical solutions of the present disclosure may offer an enhanced protection for the power supply device during power delivery between the power supply devices, thereby reducing the problems of circuit failures or even melting of the connector casing due to over-temperature, etc., occurred in the power supply device.

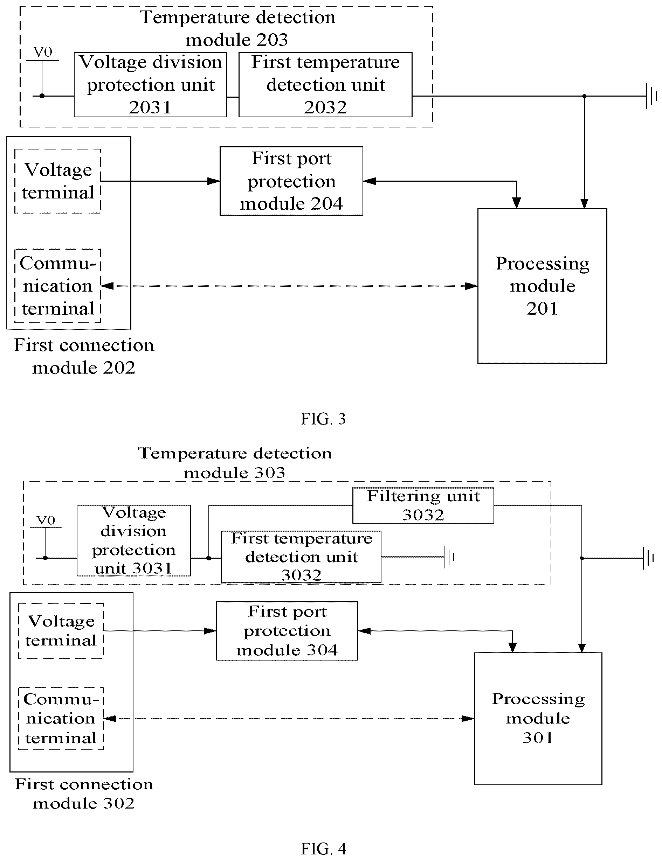

As shown in FIG. 3, FIG. 3 is a schematic structural view of a power supply device according to some embodiments of the present disclosure. The power supply device may include a processing module 201, a first connection module 202, a temperature detection module 203, and a first port protection module 204. The connections and functions of each of the processing module 201, the first connection module 202, the temperature detection module 203, and the first port protection module 204 may be referred to FIG. 1 and are not repeated herein.

In the present embodiment, the temperature detection module 203 may include a voltage division protection unit 2031 and a first temperature detection unit 2032.

A first terminal of the voltage division protection unit 2031 may be configured to receive a reference voltage. A second terminal of the voltage division protection unit 2031 may be connected to a first terminal of the first temperature detection unit 2032. A second terminal of the first temperature detection unit 2032 may be connected to a detection terminal of the processing module 201.

A resistance of the first temperature detection unit 2021 may decrease as the temperature at the voltage terminal of the first connection module increases. In a case where the processing module 201 detects that a voltage of the first temperature detection unit is lower than a predetermined voltage, the processing module 201 may further determine that the temperature exceeds a predetermined temperature.

In the present embodiment, the sum of the voltage of the voltage division protection unit 2031 and the voltage of the first temperature detection unit 2032 may be substantially equal to the reference voltage. In a case where the temperature at the voltage terminal of the first connection module 202 increases, the resistance of the first temperature detection unit 2032 may decrease accordingly. The voltage of the first temperature detection unit 2032 may decrease as the resistance of the first temperature detection unit 2032 decreases. Based on the above relationship between the temperature and the voltage, the processing module 201 may determine that the voltage of the first temperature detection unit is lower than the predetermined voltage and thus determine that the temperature at the voltage terminal of the first connection module 202 exceeds the predetermined temperature. Further, the processing module 201 may take protection measures, such as stopping the reception of the operating voltage and instructing the power-sourcing device to stop outputting the operating voltage. The temperature detection module in the present embodiment may have a simple structure, a high detection accuracy, and be easy to promote.

In the power supply device provided by some embodiments of the present disclosure, the temperature detection module may be configured to detect the temperature at the voltage terminal of the first connection module and send a value of the temperature to the processing module. The processing module may be configured to determine whether the temperature at the voltage terminal of the first connection module exceeds the predetermined temperature. In a case where the temperature exceeds the predetermined temperature, the processing module may be configured to stop the voltage terminal of the first connection module from receiving the operating voltage. In addition, the processing module may further be configured to send the power input stop message to the power-sourcing device through the communication terminal, enabling the power-sourcing device to stop outputting the operating voltage to the power supply device according to the power input stop message. In other words, in a case where an over-temperature condition occurs at a connector of the power supply device, the power supply device may be configured not only to stop receiving the operating voltage from the power-sourcing device but also to communicate with and instruct the power-sourcing device to stop outputting the operating voltage to the power supply device. Compared with a traditional one-way protection that only stops the reception of the operating voltage, some technical solutions of the present disclosure may offer an enhanced protection for the power supply device during power delivery between the power supply devices, thereby reducing the problems of circuit failures or even melting of the connector casing due to over-temperature, etc., occurred in the power supply device.

As shown in FIG. 4, FIG. 4 is a schematic structural view of a power supply device according to some embodiments of the present disclosure. The power supply device may include a processing module 301, a first connection module 302, a temperature detection module 303, and a first port protection module 304. The connections and functions of each of the processing module 301, the first connection module 302, the temperature detection module 303, and the first port protection module 304 may be referred to FIG. 2 and are not repeated herein.

In the present embodiment, the temperature detection module 303 may include a voltage division protection unit 3031, a first temperature detection unit 3032, and a filtering module 3033.

A first terminal of the filtering unit 3033 may be connected to a first terminal of the first temperature detection unit 3032. A second terminal of the filtering unit 3033 may be connected to the detection terminal of the processing module 301.

The filtering unit 3033 may be configured to filter the voltage of the first temperature detection unit 3032 and output a filtered voltage to the processing module 301, such that the processing module 301 determines whether the temperature at the voltage terminal of the first connection module 302 exceeds a predetermined temperature based on the filtered voltage. In some embodiments, in a case where the filtered voltage is lower than the predetermined voltage, the temperature of the first connection module 302 may be determined to exceed the predetermined temperature.

The filtering unit 3033 may be configured to filter the voltage of the first temperature detection unit 3032, thereby improving the accuracy of the processing module 301 in determining whether the temperature exceeds the predetermined temperature based on whether the voltage is lower than the predetermined voltage.

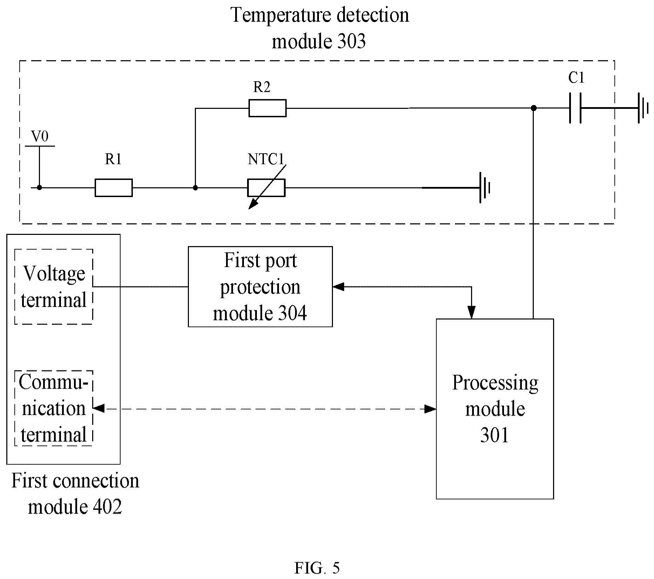

Based on the schematic structural view of the power supply device shown in FIG. 4, as shown in FIG. 5, FIG. 5 is a schematic structural view of a power supply device according to some embodiments of the present disclosure.

The first temperature detection unit 3032 may include a first thermistor NTC1. A first terminal of the first thermistor NTC1 may be connected to a second terminal of the voltage division protection unit 3031. A second terminal of the first thermistor NTC1 may be connected to the detection terminal of the processing module 301.

The voltage division protection unit 3031 may include a first resistor R1. A first terminal of the first resistor R1 may be configured to receive a reference voltage V0. A second terminal of the first resistor R1 may be connected to the first terminal of the first temperature detection unit 3032.

The filtering unit may include a second resistor R2 and a capacitor C1. A first terminal of the second resistor R2 may be connected to the first terminal of the first temperature detection unit 3032. A second terminal of the second resistor R2 may be connected to both a first terminal of the capacitor C1 and the detection terminal of the processing module 301. A second terminal of the capacitor C1 may be grounded.

In the present embodiment, based on a defined relationship between the predetermined temperature and the predetermined voltage, a rated resistance of the thermistor NTC1 and a resistance value of the first resistor R1 may be determined. For example, in a case where the resistance of the first resistor R1 is 200 Kohm, then the predetermined temperature may be 130°C and a normal operating temperature of a fully loaded first connection module 302 may be about 70°C, the resistance of NTC1 may be approximately 17.29 Kohm. In case of an over-temperature condition up to the predetermined temperature of 130°C, the resistance of NTC1 may be approximately 2.8 Kohm.

According to the power supply device provided by the present disclosure, the temperature detection module may be configured to detect the temperature at the voltage terminal of the first connection module and send the value of the temperature to the processing module. The processing module may determine whether the temperature at the voltage terminal of the first connection module exceeds the predetermined temperature. In a case where the temperature at the voltage terminal of the first connection module is determined to exceed the predetermined temperature, the voltage terminal of the first connection module may stop receiving the operating voltage. Furthermore, the processing module may be configured to send the power input stop message to the power-sourcing device through the communication terminal, enabling the power-sourcing device to stop outputting the operating voltage to the power supply device according to the power input stop message. In other words, in a case where an over-temperature condition occurs inside the connector of the power supply device, the power supply device may not only stop receiving the operating voltage from the power-sourcing device but also instruct the power-sourcing device to stop outputting the operating voltage to the power supply device through the communication connection. Compared with traditional one-way protection that only stops the reception of the operating voltage, some technical solutions of the present disclosure may offer an enhanced protection for the power supply device during power delivery between the power supply devices, thereby reducing the problems of circuit failures or even melting of the connector casing due to over-temperature, etc., occurred in the power supply device.

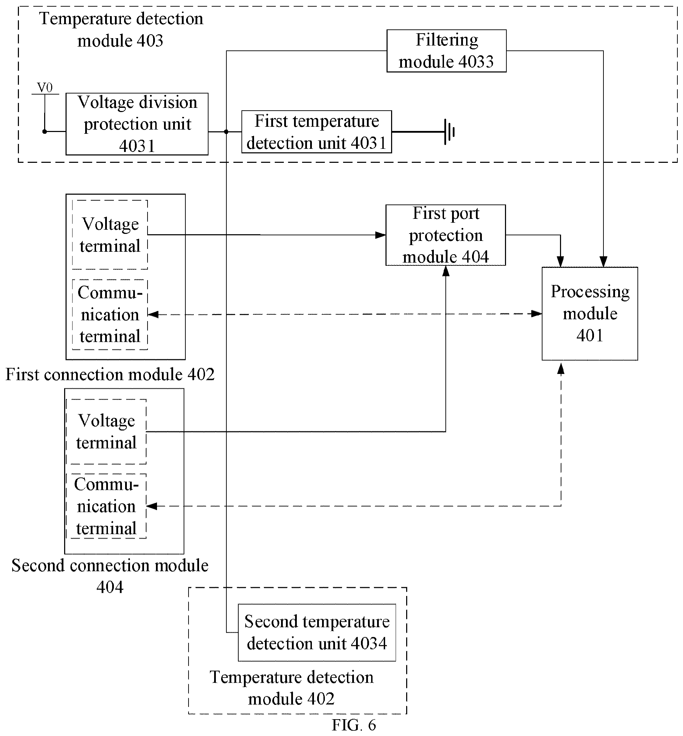

As shown in FIG. 6, FIG. 6 is a schematic structural view of a power supply device according to some embodiments of the present disclosure. The power supply device may include a processing module 401, a first connection module 402, a temperature detection module 403, and a first port protection module 404. The connections and functions of each of the processing module 401, the first connection module 402, the temperature detection module 403, and the first port protection module 404 may be referred to FIG. 2 and are not repeated herein.

The power supply device may further include a second connection module 404. The temperature detection module 403 may include: a voltage division protection unit 4031, a first temperature detection unit 4032, and a filtering module 4033. The power supply device may further include a second temperature detection unit 4032.

The second temperature detection unit 4034 of the temperature detection module 403 may be disposed within a predetermined range of a voltage terminal of the second connection module 404. The second temperature detection unit 4032 may be configured to detect the temperature at the voltage terminal of the second connection module 404 and send the temperature to the processing module 401. That is, the processing module 401 may be configured to receive the temperature of the voltage terminal of the second connection module 404 through the second temperature detection unit 4032.

The voltage terminal of the second connection module 404 may be connected to a first terminal of the first port protection module 402. In a case where the processing module 401 detects that the temperature at the voltage terminal of the second connection module 404 exceeds a predetermined temperature, the processing module 401 may be configured to control the first port protection module 402 to switch to the off state, enabling the voltage terminal of the second connection module 404 to stop receiving the operating voltage.

The communication terminal of the processing module 401 may be connected to a communication terminal of the second connection module 404. The communication terminal of the second connection module 404 may be configured to communicate with a power-sourcing device that outputs the operating voltage to the voltage terminal of the second connection module 404 (the power-sourcing device may be different from another power-sourcing device connected to the voltage terminal of the first connection module 402).

In a case where the processing module 401 detects the temperature of the voltage terminal of the second connection module 404, the communication terminal of the second connection module 404 may be configured to send a power input stop message to the power-sourcing device that outputs the operating voltage to the voltage terminal of the second connection module 404 (or to actively disconnect from the communication connection with the power-sourcing device to trigger the condition for receiving the power input stop message), enabling the power-sourcing device, that outputs the operating voltage to the voltage terminal of the second connection module 404, to stop outputting the operating voltage to the power supply device according to the power input stop message.

In the present embodiment, the power supply device may include multiple connection modules, i.e., multiple connectors. Each connection module may include the voltage terminal and the communication terminal, respectively connecting to different power-sourcing devices or power-receiving devices. In other words, the power supply device may be connected to multiple power supply devices simultaneously. Further in some embodiments, the temperature detection module may include multiple temperature detection units. Each temperature detection unit may be disposed near the voltage terminal of a respective connection module and may be connected to the detection terminal of the same processing module, thereby saving I/O interfaces of the processing module. In a case where the processing module detects that the voltage of a certain temperature detection unit is lower than the predetermined voltage, the processing module may be configured to determine that the voltage terminal of the corresponding connection module is experiencing an over-temperature condition. Through controlling the first port protection module to stop multiple connection modules from receiving the operating voltage and sending the power input stop messages to multiple power-sourcing devices or power-receiving devices, the power supply device may be well protected.

According to the power supply device provided by the present disclosure, the temperature detection module may be configured to detect the temperature at the voltage terminal of the first connection module and send the value of the temperature to the processing module. The processing module may be configured to determine whether the temperature at the voltage terminal of the first connection module exceeds the predetermined temperature. In a case where the processing module detects that the temperature at the voltage terminal of the first connection module exceeds the predetermined temperature, the voltage terminal of the first connection module may be enabled to stop receiving the operating voltage. Furthermore, the processing module may be configured to send the power input stop message to the power-sourcing device through the communication terminal, enabling the power-sourcing device to stop outputting the operating voltage to the power supply device according to the power input stop message. In other words, in a case where an over-temperature condition occurs inside the connector of the power supply device, the power supply device may not only stop receiving the operating voltage from the power-sourcing device but also instruct the power-sourcing device to stop outputting the operating voltage to the power supply device through the communication connection. Compared with traditional one-way protection that only stops the reception of the operating voltage, some technical solutions of the present disclosure may offer an enhanced protection for the power supply device during power delivery between the power supply devices, thereby reducing the problems of circuit failures or even melting of the connector casing due to over-temperature, etc., occurred in the power supply device.

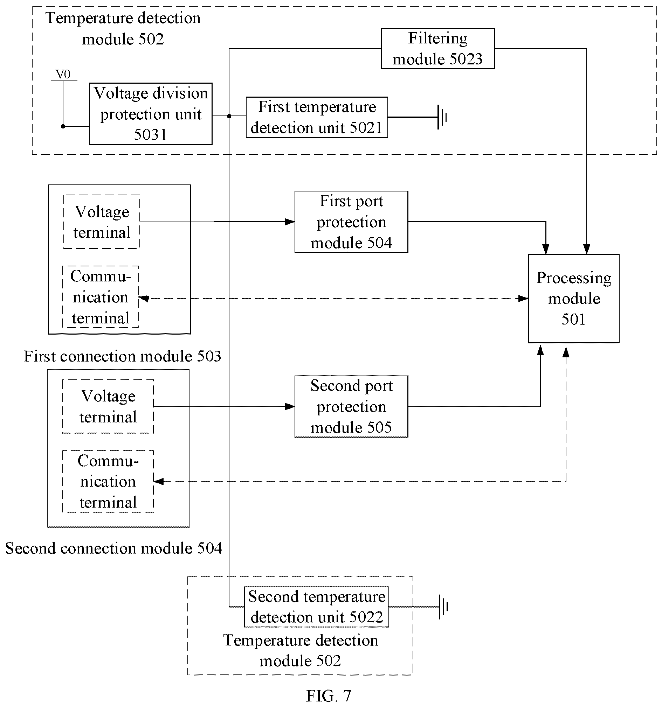

As shown in FIG. 7, FIG. 7 is a schematic structural view of a power supply device according to some embodiments of the present disclosure. The power supply device may include a processing module 401, a first connection module 402, a temperature detection module 403, and a first port protection module 404.

The power supply device may further include a second port protection module 505. A voltage terminal of the processing module 501 may be connected to a first terminal of the second port protection module 505. A second terminal of the second port protection module 505 may be connected to a voltage terminal of the second connection module 504. In a case where the processing module 501 detects that the temperature at the voltage terminal of the second connection module 504 exceeds a predetermined temperature, the processing module 501 may be configured to control the second port protection module 505 to switch to an off state, enabling the voltage terminal of the second connection module 504 to stop receiving the operating voltage.

In other words, in the present embodiment, multiple second port protection modules may be configured to protect multiple connection modules respectively. In a case where the temperature of one of the connection modules rises to the predetermined temperature, the one connection module may be allows more precisely protected.

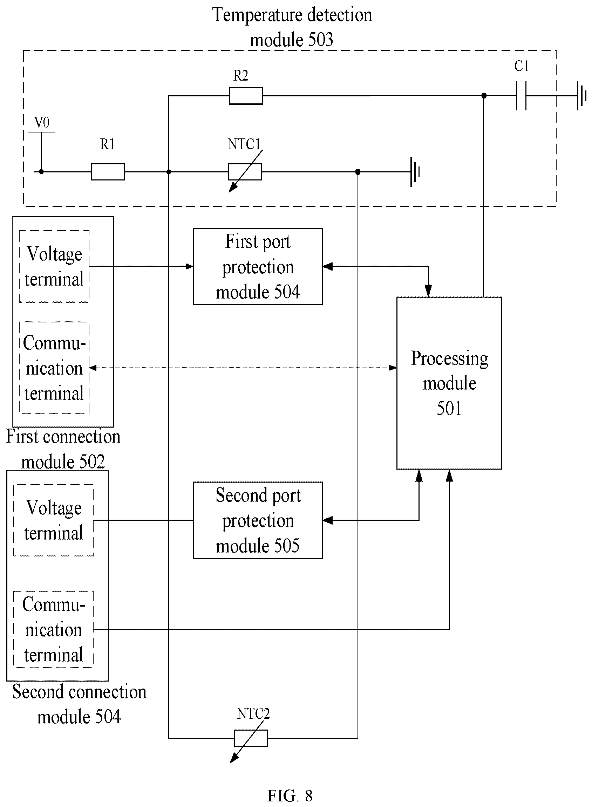

Based on the schematic structural view of the power supply device shown in FIG. 7, as shown in FIG. 8, FIG. 8 is a schematic structural view of a power supply device according to some embodiments of the present disclosure.

The second temperature detection unit 5022 may include a second thermistor NTC2. A first terminal of the second thermistor NTC2 may be connected to a second terminal of the first resistor R1 in the voltage division protection unit. A second terminal of the second thermistor NTC2 may be connected to the detection terminal of the processing module 501.

In the power supply device provided by some embodiments of the present disclosure, the temperature detection module may be configured to detect the temperature at the voltage terminal of the first connection module and send a value of the temperature to the processing module. The processing module may be configured to determine whether the temperature at the voltage terminal of the first connection module exceeds the predetermined temperature. In a case where the temperature exceeds the predetermined temperature, the processing module may be configured to stop the voltage terminal of the first connection module from receiving the operating voltage. In addition, the processing module may further be configured to send the power input stop message to the power-sourcing device through the communication terminal, enabling the power-sourcing device to stop outputting the operating voltage to the power supply device according to the power input stop message. In other words, in a case where an over-temperature condition occurs at a connector of the power supply device, the power supply device may be configured not only to stop receiving the operating voltage from the power-sourcing device but also to communicate with and instruct the power-sourcing device to stop outputting the operating voltage to the power supply device. Compared with a traditional one-way protection that only stops the reception of the operating voltage, some technical solutions of the present disclosure may offer an enhanced protection for the power supply device during power delivery between the power supply devices, thereby reducing the problems of circuit failures or even melting of the connector casing due to over-temperature, etc., occurred in the power supply device.

Those skills in the art may understand that all or part of the processes in the methods of the above embodiments may be implemented by a computer program instructing relevant hardware. The program may be stored in a computer-readable storage medium, and when executed, the program may include the processes of the embodiments of the methods described above. The storage medium may include a magnetic disk, an optical disc, a read-only memory (ROM), a random-access memory (RAM), or the like.

The technical features of the above-described embodiments may be combined in any manner. For the sake of brevity, not all possible combinations of the technical features in the above embodiments have been described. However, as long as there is no contradiction in the combination of these technical features, such combinations should be considered within the scope of this specification.

The above disclosure presents only some embodiments of the present disclosure, which certainly cannot be used to limit the scope of protection of the present disclosure. Therefore, equivalent changes made based on the claims of the present disclosure shall still fall within the scope covered by the present disclosure.

## Claims

1. A power supply device, comprising: a processing module, a first connection module, a temperature detection module, and a first port protection module;
wherein the first connection module comprises a voltage terminal and a communication terminal, the voltage terminal is configured to receive an operating voltage input from a power-sourcing device to the power supply device, the communication terminal is configured to communicate with the power-sourcing device;
the temperature detection module is disposed within a predetermined range of the voltage terminal of the first connection module, and is configured to detect a temperature at the voltage terminal of the first connection module and send a value of the detected temperature to the processing module;
wherein the processing module comprises a detection terminal, a voltage terminal, and a communication terminal, the detection terminal of the processing module is connected to an output terminal of the temperature detection module, the communication terminal of the processing module is connected to a communication terminal of the first connection module, the voltage terminal of the processing module is connected to a first terminal of the first port protection module;
wherein the first terminal of the first port protection module is connected to the voltage terminal of the processing module, and a second terminal of the first port protection module is connected to the voltage terminal of the first connection module;
wherein in a case where the processing module detects that the temperature exceeds a predetermined temperature, the processing module is configured to control the first port protection module to switch to an off state, enabling the voltage terminal of the first connection module to stop receiving the operating voltage; and
wherein in a case where the processing module detects that the temperature exceeds the predetermined temperature, the processing module is further configured to send a power input stop message to the power-sourcing device through the communication terminal of the first connection module, enabling the power-sourcing device to stop outputting the operating voltage to the power supply device according to the power input stop message.

2. The power supply device as claimed in claim 1, wherein the temperature detection module comprises a voltage division protection unit and a first temperature detection unit;
wherein a first terminal of the voltage division protection unit is configured to receive a reference voltage, a second terminal of the voltage division protection unit is connected to a first terminal of the first temperature detection unit, and a second terminal of the first temperature detection unit is connected to the detection terminal of the processing module; and
wherein the processing module is configured to control the first port protection module to switch to the off state, in a case where the processing module detects that a voltage of the first temperature detection unit is lower than a predetermined voltage.

3. The power supply device as claimed in claim 2, wherein the first temperature detection unit comprises a first thermistor; and
wherein a first terminal of the first thermistor is connected to the second terminal of the voltage division protection unit, and a second terminal of the first thermistor is connected to the detection terminal of the processing module.

4. The power supply device as claimed in claim 2, wherein the voltage division protection unit comprises a first resistor;
wherein a first terminal of the first resistor is configured to receive the reference voltage, and a second terminal of the first resistor is connected to the first terminal of the first temperature detection unit.

5. The power supply device as claimed in claim 2, wherein the temperature detection module further comprises a filtering unit;
wherein a first terminal of the filtering unit is connected to the first terminal of the first temperature detection unit, and a second terminal of the filtering unit is connected to the detection terminal of the processing module;
wherein the filtering unit is configured to filter a voltage of the first temperature detection unit and output a filtered voltage to the processing module; and
wherein the processing module is configured to control the first port protection module to switch to the off state, in a case where the processing module detects that the filtered voltage is lower than the predetermined voltage.

6. The power supply device as claimed in claim 4, wherein the filtering unit comprises a second resistor and a capacitor;
wherein a first terminal of the second resistor is connected to the first terminal of the first temperature detection unit, and a second terminal of the second resistor is connected to both a first terminal of the capacitor and the detection terminal of the processing module, and a second terminal of the capacitor is grounded.

7. The power supply device as claimed in claim 2, wherein the power supply device further comprises a second connection module and the temperature detection module further comprises a second temperature detection unit;
wherein the second temperature detection unit of the temperature detection module is disposed within a predetermined range of a voltage terminal of the second connection module, the second temperature detection unit is configured to detect a temperature at the voltage terminal of the second connection module and send the temperature at the voltage terminal of the second connection module to the processing module;
wherein the voltage terminal of the second connection module is connected to the first terminal of the first port protection module , and the processing module is configured to control the first port protection module to switch to the off state, in a case where the processing module detects that the temperature at the voltage terminal of the second connection module exceeds the predetermined temperature, enabling the first port protection module to stop receiving the operating voltage through the voltage terminal of the second connection module; and
wherein the communication terminal of the processing module is connected to a communication terminal of the second connection module, the communication terminal of the second connection module is configured to communicate with a power-sourcing device that is configured to output an operating voltage to the voltage terminal of the second connection module, and the processing module is configured to send a power input stop message to the power-sourcing device that is configured to output the operating voltage to the voltage terminal of the second connection module through the communication terminal of the second connection module, in a case where the processing module detects that the temperature at the voltage terminal of the second connection module exceeds the predetermined temperature, enabling the power-sourcing device that is configured to output the operating voltage to the voltage terminal of the second connection module to stop outputting the operating voltage to the power supply device according to the power input stop message.

8. The power supply device as claimed in claim 7, wherein the second temperature detection unit comprises a second thermistor; and
wherein a first terminal of the second thermistor is connected to the second terminal of the voltage division protection unit, and a second terminal of the second thermistor is connected to the detection terminal of the processing module.

9. The power supply device as claimed in claim 2, wherein the power supply device further comprises a second port protection module;
wherein the voltage terminal of the processing module is connected to a first terminal of the second port protection module, and a second terminal of the second port protection module is connected to the voltage terminal of the second connection module; and
wherein the processing module is configured to control the second port protection module to switch to an off state, in a case where the processing module detects that the temperature at the voltage terminal of the second connection module exceeds the predetermined temperature, enabling the second port protection module to stop receiving the operating voltage through the voltage terminal of the second connection module.

10. The power supply device as claimed in claim 1, wherein the first port protection module comprises a metal-oxide-semiconductor (MOS) transistor;
wherein a first terminal of the MOS transistor is connected to the voltage terminal of the processing module, and a second terminal of the MOS transistor is connected to the voltage terminal of the first connection module; and
wherein the processing module is configured to control the MOS transistor to switch to an off state, in a case where the processing module detects that the temperature exceeds the predetermined temperature, enabling the MOS transistor to stop receiving the operating voltage through the voltage terminal of the first connection module.
